# EUROPEAN PATENT APPLICATION

(11) **EP 1 433 973 A1**
(43) Date of publication of application: **30.06.2004**
(21) Application number: 03293339.2
(22) Date of filing: 26.12.2003
(51) Int. Cl.: F16D 65/12

(54) **Brake disc**

(30) Priority: 26.12.2002 US 328076
(71) Applicant: Westinghouse Air Brake Technologies Corporation, Wilmerding, PA 15148 (US)
(72) Inventor: Mathern, Peter, Greenville South Carolina 29605 (US)
(74) Representative: Dronne, Guy

(57) **Abstract**

A one-piece brake disc (10) comprised of a hub (14) having a predetermined width. A predetermined plurality of connecting spokes (16) having a predetermined configuration are provided. The connecting spokes (16) have a first end thereof disposed at and connected to predetermined locations around an outer periphery of the hub (14). There is a friction ring (12) having two radially opposed annular members. Each of the annular members includes an outer braking surface (38) and an inner surface (42) connected to radially opposed outer edge surfaces of the predetermined plurality of connecting spokes (16). A predetermined plurality of fins (32) having a predetermined configuration are disposed between the inner surfaces of the two radially opposed annular members and between adjacently disposed surfaces of the connecting spokes (16).

## Description

### FIELD OF THE INVENTION

The present invention generally relates to a brake disc. More particularly, the present invention relates to a one-piece brake disc with compliant spokes.

### BACKGROUND OF THE INVENTION

Previous one-piece axle mounted brake discs incorporated radial spokes connecting the hub to the friction ring. Heat generated during braking causes the friction ring to expand in relationship to the hub. With this configuration, the spoke must elongate the entire amount that the friction ring expands. This causes high stresses in the spokes, which are limited in length by the distance between the hub and friction disk. In addition, the tension in the connecting spokes tends to pull the hub away from the axle, reducing the press fit needed to resist braking torque. These two factors limit the operating temperatures for brake discs of this design.

Another prior method of manufacturing brake discs involved using a continuous bell-shaped flange to attach the friction ring and hub. Under thermal expansion of the friction ring, the bell shape of the flange allows for some degree of thermal expansion, but tends to generate significant hoop stresses in the material. This prior method used a two-piece casting with different materials for the friction ring and the connecting flange/ hub. The two-piece method allowed the materials to be optimized to their function on the disc, but was problematic to manufacture.

### SUMMARY OF THE INVENTION

In one aspect, the invention generally features a one-piece brake disc. The brake disc includes a hub having a predetermined width. There are a predetermined plurality of connecting spokes having a predetermined configuration, with a first end thereof disposed at and connected to predetermined locations around an outer periphery of the hub. The brake disc also includes a friction ring having two radially opposed annular members, each of the annular members including an outer braking surface and an inner surface connected to radially opposed outer edge surfaces of the predetermined plurality of connecting spokes. A predetermined plurality of fins, having a predetermined configuration, are disposed between the inner surfaces of the two radially opposed annular members and between adjacently disposed surfaces of the connecting spokes.

In another aspect, the invention generally features a connecting spoke for use in a brake disc. The spoke is an elongated member having a first end thereof engageable with and connectable to a hub. The elongated member has a predetermined profile and a predetermined cross section. A second end of the connecting spoke is disposed between inner surfaces of two radially opposed annular members closely adjacent an outer periphery thereof when assembled into a disc brake.

### OBJECTS OF THE INVENTION

It is an object of the present invention to increase the functional operating temperatures of a brake disc.

It is another object of the present invention to create a brake disc spoke that is compliant in the direction required for thermal expansion, yet stiff in the direction required to resist shock.

It is still a further object of the present invention to reduce the stress in the spokes of a brake disc.

It is yet another object of the present invention to have a brake disc that benefits from the higher fatigue properties of the material when loaded in bending.

In addition to the above-described objects and advantages of the brake disc, various other objects and advantages of the present invention will become more readily apparent to the persons who are skilled in the same and related arts from the following more detailed description of the invention, particularly, when such description is taken in conjunction with the attached drawing figures and the appended claims.

### DESCRIPTION OF THE DRAWING

Figure 1 is a sectional side view of the brake disc.
Figure 2 is a sectional end view of the brake disc.

### DETAILED DESCRIPTION OF THE PRESENTLY PREFERRED EMBODIMENT

Prior to proceeding to a much more detailed description of the present invention, it should be noted that identical components which have identical functions have been identified with identical reference numerals throughout the several views illustrated in the drawing figures for the sake of clarity and understanding of the invention.

The present invention will now be described by way of a particular preferred embodiment, reference being had to the accompanying drawings, wherein:

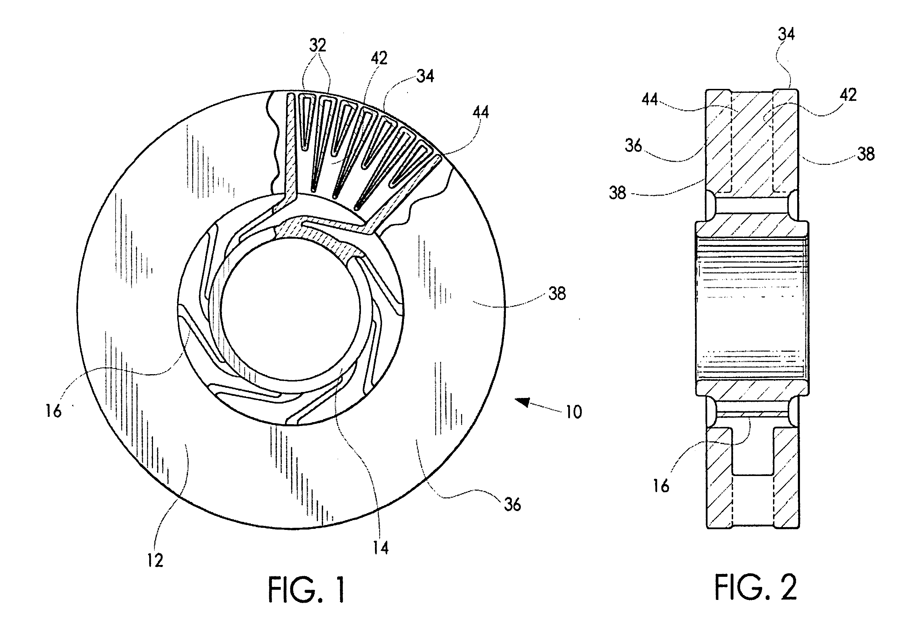

Figure 1 shows a one-piece brake disc (10) of the present invention consisting of a friction ring (12), a hub (14), and a number of connecting spokes (16). The friction ring (12) includes two radially opposed annular members (34, 36), each annular member having an outer braking surface (38). An inner surface (42) is connected to radially opposed outer edge surfaces (44) of the connecting spokes (16), and also connected by a number of radial fins (32). The hub (14) section can be made to press fit onto an axle. The connecting spokes (16) are roughly perpendicular to the radius of the disc, and are shaped to allow the friction ring (12) to expand freely under thermal loading.

The present invention improves upon the shortcomings of the prior art brake discs by creating a connecting spoke (16) that is compliant in the direction required for thermal expansion, yet stiff in the direction required to resist shock (figures 1 and 2). These favorable attributes are a function of the connecting spoke (16) profile and cross-section. The connecting spokes (16) emerge from the hub (14) and contain an arcuate section that transitions into a straight section. This straight section is roughly perpendicular to the radius of the brake disc (10). A second portion of the connecting spokes (16) contain an arcuate section that transitions smoothly from the straight section into the friction ring (12) and continues outward radially at a predetermined angle from the hub. As the friction ring (12) undergoes thermal expansion, the connecting spokes (16) bend outward. This movement results in a slight rotation of the friction ring (12) in relation to the hub (14). The length and the angle of the connecting spokes (16) relative to the direction of the expansion (roughly perpendicular), minimize the amount of angular displacement needed to accommodate the friction ring (12) expanding. This limited displacement reduces the stress in the connecting spokes (16).

Furthermore, the cross section of the connecting spokes (16) is significantly wider than it is thick. This shape also reduces the stresses in the connecting spokes (16) as the friction ring (12) expands. In addition, this configuration benefits from the higher fatigue properties of the material when loaded in bending.

The profile of the connecting spokes (16) is approximately straight. This shape causes radial shock loads on the brake disc (10) to be absorbed in tension/compression of the set of connecting spokes (16) that are roughly aligned with the shock direction. The connecting spokes (16) are much stiffer in tension/compression than in bending, so the compliance of the brake disc (10) to shock loading is minimal.

Likewise, the torque forces generated during braking also affect the connecting spokes (16) in tension/compression. The stiffness of the friction ring (12) and hub (14) is quite high in comparison to the connecting spokes (16), which ensures that braking torque is distributed evenly between the connecting spokes (16).

The selectively compliant design of the connecting spokes (16) allow the disc to be used at higher temperatures than would be possible with straight radial spokes. Also, the expansion of the friction ring (12) tends to pull the hub (14) away from the axle significantly less than prior art.

The design of present invention allows it to be cast as a single unit if desired, and is able to be manufactured from a variety of materials, such as metallics, ceramics, or carbon fiber.

While the present invention has been described by way of a detailed description of a particularly preferred embodiment, it will be readily apparent to those of ordinary skill in the art that various substitutions of equivalents may be affected without departing from the spirit or scope of the inventions set forth in the appended claims.

## Claims

1. A one-piece brake disc (10), said brake disc being **characterized in that** it comprises:
(a) a hub (14), having a predetermined width;
(b) a predetermined plurality of connecting spokes (16), having a predetermined configuration, said connecting spokes (16) having a first end thereof disposed at and connected to predetermined locations around an outer periphery of said hub (14);
(c) a friction ring (12) having two radially opposed annular members (34, 36), each of said annular members including an outer braking surface (38) and an inner surface (42) connected to radially opposed outer edge surfaces of said predetermined plurality of connecting spokes (16); and
(d) a predetermined plurality of fins (32), having a predetermined configuration, disposed between said inner surface (42) of said two radially opposed annular members (34, 36) and between adjacently disposed surfaces of said connecting spokes (16).

2. A one-piece brake disc (10) according to claim 1, wherein said connecting spokes (16) have a second end adjacent an outer peripheral edge of each of said annular members.

3. A one-piece brake disc (10) according to claim 1 or 2, wherein an outer edge of said fins (32) begins closely adjacent an outer peripheral edge of each of said annular members.

4. A one-piece brake disc (10) according to any one of claims 1 to 3, wherein said connecting spokes (16) have at least one straight section and at least one arcuate section.

5. A one-piece brake disc (10) according to any one of claims 1 to 3, wherein said connecting spokes (16) have at least two straight sections and at least two arcuate sections.

6. A one piece brake disc according to any one of claims 1 to 5, wherein said predetermined width of said hub (14) is greater than a width of said braking surface of said friction rings (12).

7. A one-piece brake disc (10) according to any one of claims 1 to 6, wherein said brake disc is cast as a single piece.

8. A one-piece brake disc (10) according to any one of claims 1 to 7, wherein said brake disc is made from a predetermined metallic composition.

9. A one-piece brake disc (10) according to any one of claims 1 to 7, wherein said brake disc is made from carbon fiber.

10. A one-piece brake disc (10) according to any one claims 1 to 7, wherein said brake disc is made from a predetermined ceramic composition.

11. A connecting spoke for use in a brake disc, said spoke being **characterized in that** it comprises:
an elongated member having a first end thereof engageable with and connectable to a hub (14), said elongated member having a predetermined profile, a predetermined cross section, and a second end being disposed between inner surfaces (42) of two radially opposed annular members (34, 36) closely adjacent an outer periphery thereof when assembled into a disc brake.

12. A connecting spoke for use in a brake disc according to claim 11, wherein said spoke connects at a first end to a hub (14) at a predetermined angle and arcing into a first end of a straight section at a predetermined angle, said straight section being disposed roughly perpendicular to a radius of such brake disc, said straight section then arcing at a second end toward a friction ring (12) at a predetermined angle, said connecting spoke continuing outward radially to a second end, and said second end being disposed between such inner surfaces (42) of such two radially opposed annular members and between adjacently disposed connecting spokes (16).

13. A connecting spoke according to claim 12, wherein said connecting spokes (16) contain a cross section that is significantly wider than it is thick.

14. A connecting spoke according to claim 12 or 13, wherein said connecting spokes (16) have a second end adjacent outer ends each of said annular members.

15. A connecting spoke according to any one of claims 12 to 14, wherein said connecting spoke is made from a predetermined metallic composition.

16. A connecting spoke according to any one of claims 12 to 14, wherein said connecting spoke is made from carbon fiber.

17. A connecting spoke according to any one of claims 12 to 14, wherein said connecting spoke is made from predetermined ceramic composition.
